# EUROPEAN PATENT SPECIFICATION

(11) **EP 1 946 416 B1**
(45) Date of publication and mention of the grant of the patent: **11.09.2013**
(21) Application number: 06826539.6
(22) Date of filing: 24.10.2006
(51) Int. Cl.: H04M 1/03, H04M 1/02, H04B 1/034, H04B 1/08

(54) **TRANSLUCENT OR TRANSPARENT COVER AND DEVICE WITH SUCH A COVER**
DURCHSICHTIGE ODER TRANSPARENTE ABDECKUNG UND EINRICHTUNG MIT EINER SOLCHEN ABDECKUNG
CAPOT TRANSLUCIDE OU TRANSPARENT ET DISPOSITIF L'UTILISANT

(30) Priority: 01.11.2005 CN 200510118669
(43) Date of publication of application: 23.07.2008
(73) Proprietor: Motorola Mobility LLC, Libertyville, IL 60048 (US)
(72) Inventor: SU, Wei, Beijing 100011 (CN); CHEN, Ming Iung, Beijing 100022 (CN); WU, Ning, Beijing 100089 (CN); ZHOU, Guang Ping, Beijing 101300 (CN)
(74) Representative: Kuhnen & Wacker
(86) International application number: PCT/US2006/041428
(87) International publication number: WO 2007/053368

(56) References cited:
- WO-A1-99/40706
- US-A- 6 088 240
- US-A- 6 091 938
- US-A1- 2002 071 550
- US-B1- 6 256 481

## Description

### FIELD OF THE INVENTION

This invention relates in general to an electronics device with a translucent or transparent movable cover. The invention is particularly useful for, but not necessarily limited to, portable electronics devices such as two-part radio communications devices with a translucent or transparent moveable cover movably mounted to a body of the device.

### BACKGROUND OF THE INVENTION

Movable covers are often used to cover user interfaces on electronic devices. Such covers (often called a door, a flap or a flip) are increasingly deployed on personal hand-held communication devices, such as cellular or mobile radio telephones, two-way radios and the like, and serve to protect the device's user interface from accidental actuation. They also often serve to provide a smaller more compact and more attractive electronic device by a use folding arrangement with the main body of the device.

In some of these devices the moveable cover can open to activate the device, and the cover can also function as a mouthpiece or earpiece by use of a cover mounted transducer (speaker or microphone). Any required electrical connections between this transducer, through a hinge, to the main body typically require wires or flexible circuit conductors. Such wires are typically hidden in opaque regions of the cover. Further, the transducer connections and mounting are also typically hidden by opaque regions of the cover. Although a small window can be located in the cover for a user to typically view a display screen on the main body when the cover is a closed position covering the screen, the transducer wires and transducer connections are not suitable for allowing transparent or translucent covers.

Prior art examples can be found in US 6 256 481 and US 6 088 240.

In this specification, including the claims, the terms 'comprises', 'comprising' or similar terms are intended to mean a non-exclusive inclusion, such that a method or apparatus that comprises a list of elements does not include those elements solely, but may well include other elements not listed.

### SUMMARY OF THE INVENTION

According to one aspect of the invention there is provided transparent or translucent cover for an electronics device as in claim 1.

Suitably, first lengths of the wires adjacent the transducer assembly extend towards a first end edge of the cover. Each of the first lengths of the wires may be parallel to each other. There may be respective second lengths of the wires extend laterally from the first length of the wires towards longitudinal edges of the cover. There may be two said second lengths of the wires and wherein the said second lengths of the wires extend in opposite directions.

Suitably, the second lengths of the wires are along areas adjacent the first end edge of the cover. There may be respective third lengths of the wires that extend laterally from the second lengths of the wires towards a second end edge of the cover. The third lengths of the wires can be along areas adjacent respective opposite longitudinal edges of the cover.

The cover may further have an inner former and an outer enclosure at least partially enclosing edges of the inner former and wherein the plurality of wires run from the transducer assembly along at least one of the edges of the inner former. Also, it at least one length of the wires can be insert molded into the former.

According to another aspect of the invention there is provided an electronics device comprising: a housing with electronics circuitry mounted therein; a cover movably mounted to the housing at a fixed end edge of the cover, the cover comprising: a transparent or translucent cover body; a transducer assembly in the cover body and electrically coupled to the electronics circuitry by wires, wherein the wires are symmetrically located in the cover body with respect to a central longitudinal axis of the cover.

Suitably, the cover is pivotally mounted to the housing at the fixed end edge by a hinge assembly, the hinge assembly allowing for relative pivotal movement of the cover relative to the housing. First lengths of the wires adjacent the transducer assembly may extend towards a free end edge of the cover and the first lengths of the wires are parallel to each other.

The should be second lengths of the wires that extend laterally from the first length of the wires towards longitudinal edges of the cover. There are typically two said second lengths of the wires and wherein the said second lengths of the wires extend in opposite directions. The second lengths of the wires may be along areas adjacent the free end edge of the cover.

Suitably, there are respective third lengths of the wires that extend laterally from the second lengths of the wires towards fixed end edge of the cover. The third lengths of the wires can be along areas adjacent respective opposite longitudinal edges of the cover.

Typically, the cover comprises an inner former and an outer enclosure at least partially enclosing edges of the inner former and wherein the wires run from the transducer assembly along at least one of the edges of the inner former. At least one length of the wires can insert molded into the former.

Suitably, lengths of the wires extend along opposite edges of the former from the free end towards the hinge assembly. Lengths of the wires are typically sandwiched between the former and outer enclosure.

### BRIEF DESCRIPTION OF THE DRAWINGS

In order that the invention may be readily understood and put into practical effect, reference will now be made to an exemplary embodiment as illustrated with reference to the accompanying figures, where like reference numerals refer to identical or functionally similar elements throughout the separate views. The figures together with a detailed description below, are incorporated in and form part of the specification, and serve to further illustrate the embodiments and explain various principles and advantages, in accordance with the present invention where:
Fig. 1 is an exploded view of a transparent cover for an electronics device in accordance with the invention;
Fig. 2 an exploded view of the cover of Fig. 1 after a transducer assembly 115 has been insert molded with an inner former;
Fig. 3 is a detailed perspective view of wires when bent on the inner former of the cover of Fig. 1;
Fig. 4 illustrates a perspective view of the cover of Fig. 1 after the inner former 105 is insert molded into the outer enclosure 110;
Fig. 5 illustrates a perspective view of the cover of Fig. 1 when assembled;
Fig. 6 illustrates a perspective view of an electronics device with the cover of Fig. 1; and
Fig. 7 illustrates a method 700 for manufacturing the cover of Fig. 1 and mounting it to the electronics device of Fig. 6.

Skilled artisans will appreciate that elements in the figures are illustrated for simplicity and clarity and have not necessarily been drawn to scale. For example, the dimensions of some of the elements in the figures may be exaggerated relative to other elements to help to improve understanding of embodiments of the present invention.

### DETAILED DESCRIPTION

Before describing in detail an embodiment in accordance with the present invention, it should be observed that the embodiment resides primarily in combinations of method steps, a device and cover. Accordingly, the method steps, a device and cover have been represented where appropriate by conventional symbols in the drawings, showing only those specific details that are pertinent to understanding the embodiment of the present invention so as not to obscure the disclosure with details that will be readily apparent to those of ordinary skill in the art having the benefit of the description herein.

In this document, relational terms such as first and second, top and bottom, and the like may be used solely to distinguish one entity or action from another entity or action without necessarily requiring or implying any actual such relationship or order between such entities or actions. The terms "comprises," "comprising," or any other variation thereof, are intended to cover a non-exclusive inclusion, such that a method, device or cover that comprises a list of elements does not include only those elements but may include other elements not expressly listed or inherent to such method steps, device or cover. An element proceeded by "comprises ...a " does not, without more constraints, preclude the existence of additional identical elements in the method steps, device or cover.

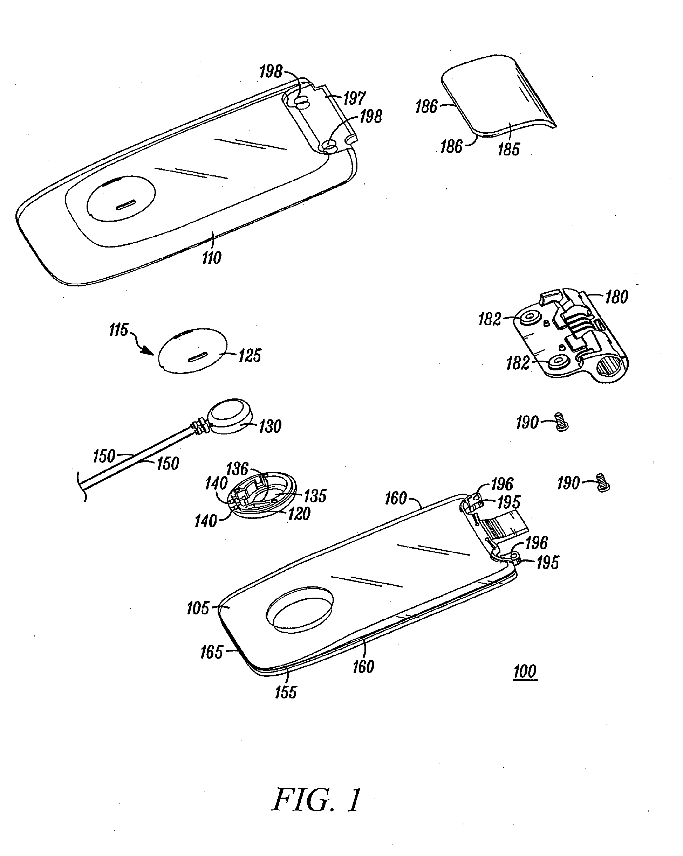

In the drawings, like numerals on different Figs are used to indicate like elements throughout. With reference to Fig. 1, there is illustrated an exploded view of a substantially transparent cover 100 (also referred to as a cover body) for an electronics device, the cover 100 may be totally transparent or it may be translucent. The cover 100 includes an inner former 105, an outer enclosure 110, a transducer assembly 115 and wires 150. Also associated with the cover 100 are an inner hinge mount 180 with mounting apertures 182, a hinge cover 185 with threaded blind apertures 186, mounting screws 190. On the outer enclosure 110 there are mounting screw receiving apertures 198 in a cover locating recess 197 and on the inner former 105 there are bosses 195 with hinge mounting apertures 196.

The inner former 105 has a recessed groove 155 extending along opposite longitudinal edges 160, the recessed groove 155 also extends along a lateral edge 165 of the inner former 105, the lateral edge 165 being lateral relative to the longitudinal edges 160.

The transducer assembly 115 includes a two part enclosure of a base 120 and a snap fitted lid 125 encapsulating a transducer 130 that is typically a speaker or microphone. The transducer 130 fits into a recess 135 in the base 120 and the wires 150 are electrically mounted by soldering to electrical connectors of the transducer 130. A speaker aperture 136 is located in the recess 135 to allow the transducer 130 to communicate outside the two part enclosure. When the transducer 130 is encapsulated in the two part enclosure, the wires 150 pass through respective passages 140 and out of the enclosure.

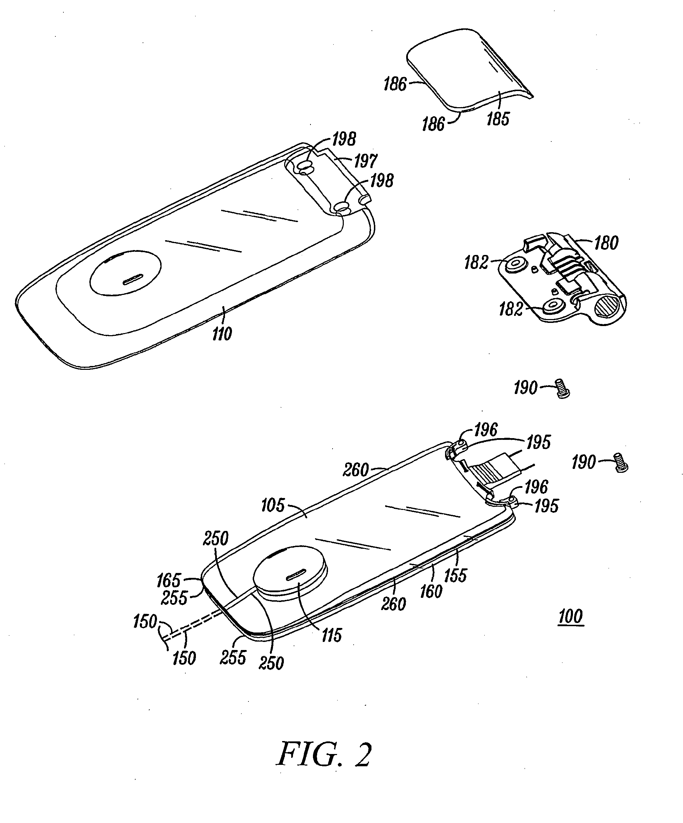

In Fig. 2 there is illustrated another exploded view of the substantially transparent cover 100 after the transducer assembly 115 and a first length 250 of each of the wires 150 have been integrally or insert molded with the inner former 105. In this regard the inner former 105 typically comprises injection molded transparent plastics with which the transducer assembly 115 is integrally molded in a manner that does not cover the speaker aperture 136. Once integrally molded, the first length 250 of each of the wires 150 is totally encapsulated in the inner former 105 and the wires extend typically in straight lines as illustrated in phantom.

After creating the inner former 105 by injection moulding, the wires 150 are then typically manually bent to have opposite extending second lengths 255 that extend in opposite directions, laterally from the first lengths 250, in the recessed groove 155 running along (from the transducer assembly via first lengths 250) the lateral edge 165 of the inner former 105. The second lengths 255 extend laterally from the first lengths 250 towards longitudinal edges of the cover. The wires 150 are further bent to have substantially parallel third lengths 260 that extend in the recessed groove 155 along the opposite longitudinal edges 160 of the former 105 and thus third lengths 260 are symmetrically supported on the inner former 105.

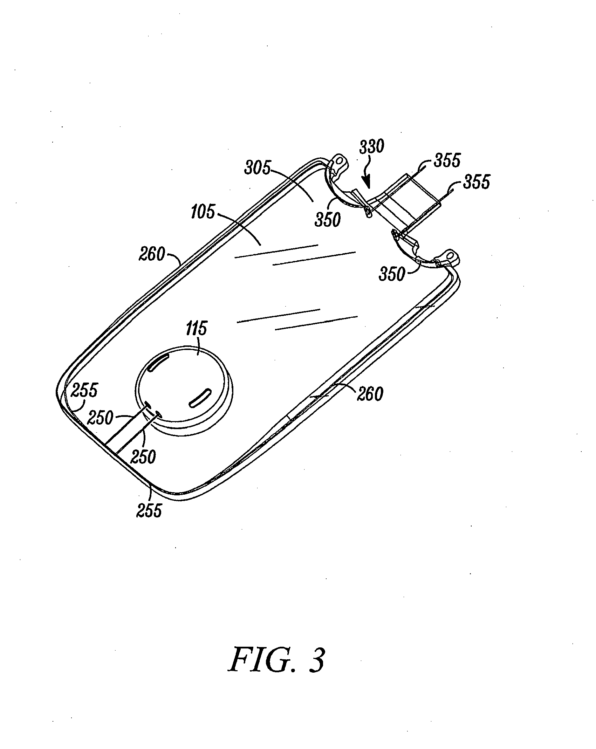

Referring to Fig. 3 there is illustrated a detailed perspective view of the wires 150 when bent on the inner former 105. Typically the wires are manually bent around the edges 160, 165 and inserted into the recessed groove of the inner former 105. Also, adjacent hinge edges 330 of the inner former 105, the wires 150 are bent to form fourth lengths 350 running along an outer enclosure mating surface 305. The wires also have fifth lengths 355 extending away from the hinge edges 330.

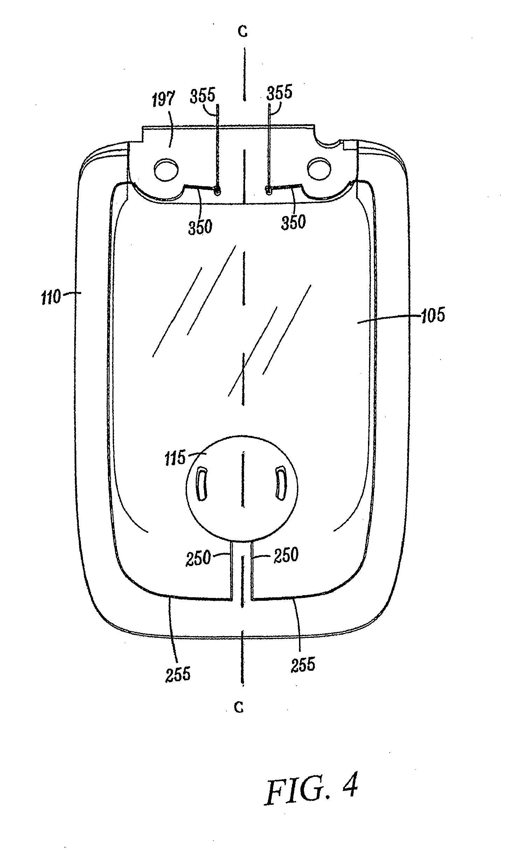

In Fig. 4 there is illustrated a perspective view of the substantially transparent cover 100 (excluding the hinge cover 185 and inner hinge mount) after the inner former 105 is insert molded into the outer enclosure 110 that encloses edges 160, 165 of the inner former 105 and covers the outer mating surface 303 and most of the snap fitted lid 125. The outer enclosure 110 is typically inject molded with a transparent plastics as will be apparent to a person skilled in the art. Also, as illustrated, the wires are symmetrically located in the cover (cover body) with respect to a central longitudinal axis "C" of the cover.

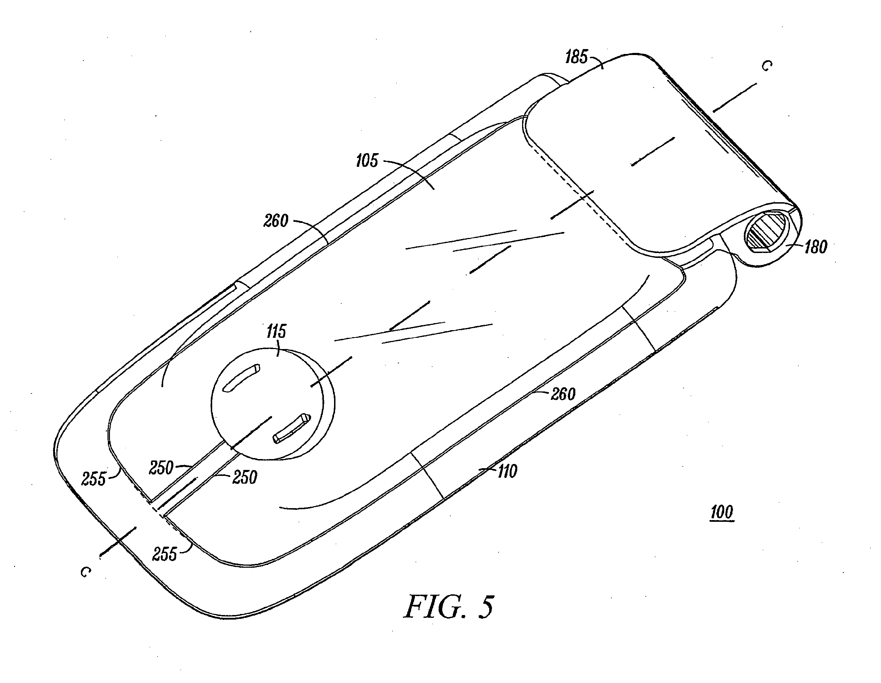

Referring to Fig. 5 an assembled substantially transparent cover 100 is illustrated. When assembled, the screws 190 couple aligned apertures 182, 196, 198 and 186 as will be apparent to a person skilled in the art.

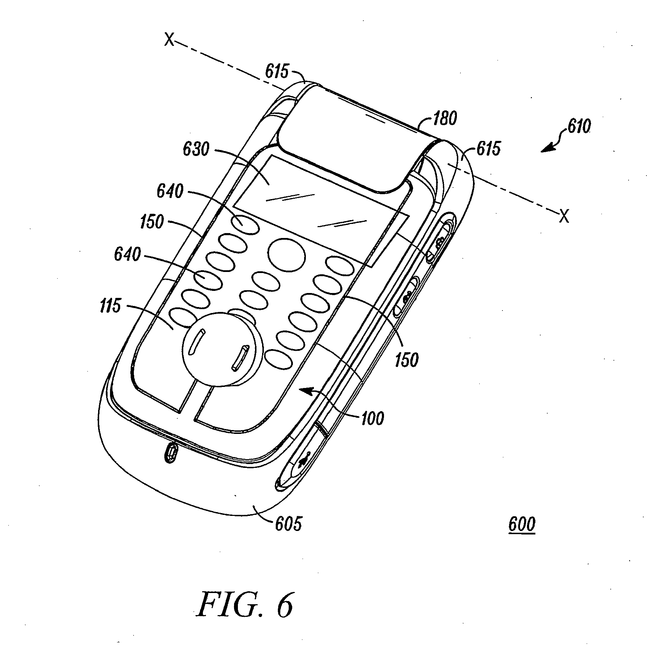

In Fig. 6 there is illustrated an electronics device 600 with the cover 100. The electronics device 600 has a body 605 with electronics circuitry mounted therein including a display driver for driving a display 630 and switches actuatable by associated aligned keypad keys 640. The transparent or translucent cover 100 is movably mounted to the body, by a hinge assembly 610 comprising the inner hinge mount 180 and two outer mounting bosses 615. The hinge assembly allows for relative pivotal movement of the cover 100 relative to the body about a pivotal axis X from a closed position as illustrated to an opened position. Also, the transducer assembly 115 is electrically coupled to the electronics circuitry by wires 150 in which ends of the fifth lengths 355 are attached to terminals associated with the electronics circuitry. As illustrated, the lateral edge 165 and longitudinal edges 160 of the inner former 105 are of a complementary shape to corresponding adjacent outer enclosure 110 edges that form outer edges of the cover 105. Also, the first length 250 of each of the wires 150 adjacent the transducer assembly extends away from the hinge assembly 610 towards a free end of the cover 100, whereas the third lengths 260 extend along opposite edges of the former 110 from the free end towards the hinge assembly 610.

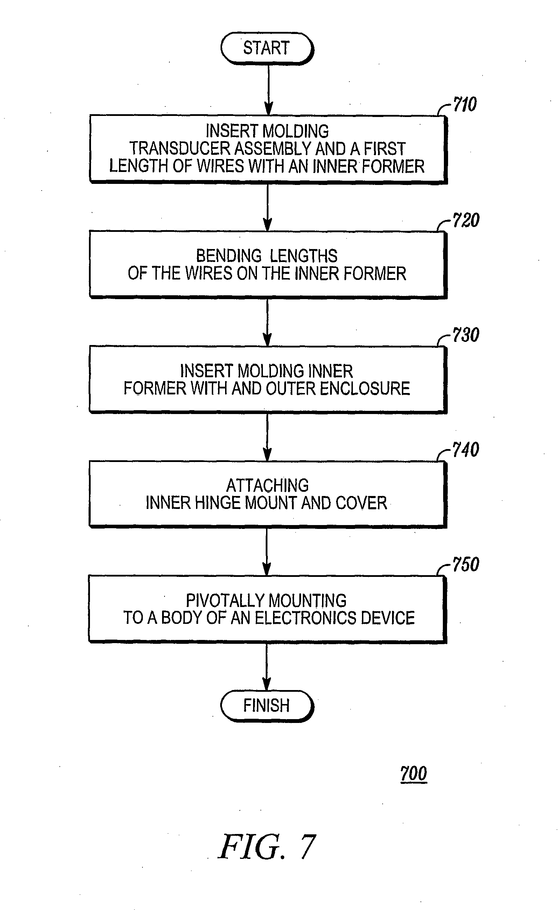

Referring specifically to Fig 7, and also to Figs. 1 to 6 as and when required, there is illustrated a method 700 for manufacturing the cover 100 and mounting it to the electronics device 600 First, at block 710, the method 700 provides for insert molding the transducer assembly 115 and the first length 250 of the wires 150 into the inner former 105. Thus, an integrally molded transducer assembly 115, first length 250 of the wires 150 and transparent or translucent inner former 105 are produced in which the transducer assembly 115 is essentially mounted to the inner former 105.

Next, at block 720, bending lengths of the wires 150 on the inner former 105 is conducted. Typically the wires 150 are manually bent around the edges 160, 165 and inserted into the recessed groove 155 thereby the second and third lengths 255, 260 are located and supported on respective edges 160, 165. Also, the wires 150 are bent to form the fourth lengths 350 and fifth lengths 355 (as shown in Fig. 3). The method 700 then performs, at block 730, insert molding of the inner former 105 with the outer enclosure 110 (as shown in Fig. 4). Thus, a substantial length of the wires 150, specifically all of lengths 255, 260, 350 and part of fifth length 355) is sandwiched between the inner former 105 and outer enclosure 110.

Next, at block 740, the method 700 performs attaching the inner hinge mount 180 and hinge cover 185 with the screws 190 (as shown in Fig. 5). Finally, at block 750, the method 700 performs pivotally mounting the cover 100 to the electronics device 600.

Advantageously, the present invention provides an translucent or transparent movable cover that when in the closed position covers the body 605 of the electronics device 600. However, the cover 100 does not hide, for instance the display 630 or the keys 640. The wires 150 are typically no-insulated and are suitably silver and thus become almost unnoticeable, especially since they generally follow the outline of edges of the cover 100 by virtue of the lateral edge 165 and longitudinal edges 160 being of complementary shape to corresponding adjacent outer enclosure 110 edges.

In the foregoing specification, a specific embodiment of the present invention has been described. However, one of ordinary skill in the art appreciates that various modifications and changes can be made without departing from the scope of the present invention as set forth in the claims below. Accordingly, the specification and figures are to be regarded in an illustrative rather than a restrictive sense, and all such modifications are intended to be included within the scope of present invention. The benefits, advantages, solutions to problems, and any element(s) that may cause any benefit, advantage, or solution to occur or become more pronounced are not to be construed as a critical, required, or essential features or elements of any or all the claims. The invention is defined solely by the appended claims including any amendments made during the pendency of this application and all equivalents of those claims.

## Claims

1. A transparent or translucent cover (100) for an electronics device, the cover comprising:
an inner former (105) and an outer enclosure (110) at least partially enclosing edges of the inner former;
a transducer assembly (115) in the cover; and
a plurality of wires (150) running from the transducer assembly along at least the longitudinal edges (160) of the inner former, the longitudinal edges of the inner former following adjacent lateral edges of the outer enclosure whereby the wires follow the longitudinal edges of the cover.

2. A transparent or translucent cover, as claimed in claim 1, wherein the transducer assembly is insert molded to the former.

3. A transparent or translucent cover, as claimed in claim 2, wherein at least one length of the wires is insert molded into the former.

4. A transparent or translucent cover, as claimed in claim 3, wherein the former is insert molded with the outer enclosure.

5. An electronics device (600) comprising:
a body (605) with electronics circuitry mounted therein, and
a transparent or translucent cover (100) according to any one of claims 1 to 4 moveably mounted to the body.

6. An electronics device, as claimed in claim 5, wherein the cover is movably mounted to the body by a hinge assembly (610), the hinge assembly allowing for relative pivotal movement of the cover relative to the body.

7. An electronics device, as claimed in claim 5, wherein there are two of said wires symmetrically supported on the former.

8. An electronics device, as claimed in claim 7, wherein wires extend along opposite edges of the former.

9. An electronics device, as claimed in claim 8, wherein first length (250) of each of the wires adjacent the transducer assembly extends away from the hinge assembly towards a free end of the cover.

10. An electronics device, as claimed in claim 9, wherein the wires have opposite extending second lengths (255) that extend in opposite directions along a lateral edge of the inner former, the lateral edge being lateral relative to the longitudinal edges.

11. An electronics device, as claimed in claim 10, wherein wires also have substantially parallel third lengths (260) extend along opposite edges of the former from the free end towards the hinge assembly.

12. An electronics device, as claimed in claim 5, wherein the lateral edge and longitudinal edges of the inner former are of a complementary shape to corresponding adjacent edges of the cover.

## Patentansprüche

1. Transparente oder transluzente Abdeckung (100) für eine elektronische Einrichtung, wobei die Abdeckung aufweist:
einen inneren Former (105) und eine äußere Einfassung (110), die zumindest teilweise die Ränder des inneren Formers einfasst;
einen Wandler-Aufbau (115) in der Abdeckung; und
eine Mehrzahl an Drähten (150), die von dem Wandler-Aufbau zumindest entlang der Längsränder (160) des inneren Formers verlaufen, wobei die Längsränder des inneren Formers benachbarten Seitenrändern der äußeren Einfassung folgen, wobei die Drähte den Längsrändern der Abdeckung folgen.

2. Transparente oder transluzente Abdeckung nach Anspruch 1, wobei der Wandler-Aufbau an den Former hinterspritzt wird.

3. Transparente oder transluzente Abdeckung nach Anspruch 2, wobei zumindest eine Länge der Drähte in den Former hinterspritzt wird.

4. Transparente oder transluzente Abdeckung nach Anspruch 3, wobei der Former mit der äußeren Einfassung hinterspritzt wird.

5. Elektronische Einrichtung (600), aufweisend:
einen Körper (605) mit darin befestigter elektronischer Schaltung, und
eine transparente oder transluzente Abdeckung (100) nach einem der Ansprüche 1 bis 4, die beweglich an dem Körper befestigt ist.

6. Elektronische Einrichtung nach Anspruch 5, wobei die Abdeckung mit einer Scharniergruppe (610) beweglich an dem Körper befestigt ist, wobei die Scharniergruppe eine relative Drehbewegung der Abdeckung im Verhältnis zu dem Körper ermöglicht.

7. Elektronische Einrichtung nach Anspruch 5, wobei zwei der Drähte symmetrisch auf dem Former gelagert sind.

8. Elektronische Einrichtung nach Anspruch 7, wobei die Drähte entlang entgegengesetzter Ränder des Formers verlaufen.

9. Elektronische Einrichtung nach Anspruch 8, wobei die erste Länge (250) eines jeden Drahtes, der sich in der Nähe des Wandler-Aufbaus befindet, von der Scharniergruppe weg hin zu einem freien Ende der Abdeckung verläuft.

10. Elektronische Einrichtung nach Anspruch 9, wobei die Drähte zweite entgegengesetzt verlaufende Längen (255) aufweisen, die in entgegengesetzte Richtungen entlang eines Seitenrands des inneren Formers verlaufen, wobei der Seitenrand im Verhältnis zu den Längsrändern seitlich ist.

11. Elektronische Einrichtung nach Anspruch 10, wobei die Drähte auch im Wesentlichen parallele dritte Längen (260) aufweisen, die entlang entgegengesetzter Ränder des Formers von dem freien Ende in Richtung der Scharniergruppe verlaufen.

12. Elektronische Einrichtung nach Anspruch 5, wobei der Seitenrand und die Längsränder des inneren Formers eine zu den entsprechenden benachbarten Rändern der Abdeckung komplementäre Form aufweisen.

## Revendications

1. Couvercle transparent ou translucide (100) pour un dispositif électronique, le couvercle comprenant :
un formeur interne (105) et une enceinte externe (110) enfermant au moins partiellement les bords du formeur interne ;
un ensemble de transducteur (115) dans le couvercle ; et
une pluralité de fils (150) s'étendant de l'ensemble de transducteur le long d'au moins les bords longitudinaux (160) du formeur interne, les bords longitudinaux du formeur interne suivant des bords latéraux adjacents de l'enceinte externe, moyennant quoi les fils suivent les bords longitudinaux du couvercle.

2. Couvercle transparent ou translucide selon la revendication 1, dans lequel l'ensemble de transducteur est moulé par insertion sur le formeur.

3. Couvercle transparent ou translucide selon la revendication 2, dans lequel au moins une longueur des fils est moulée par l'insertion dans le formeur.

4. Couvercle transparent ou translucide selon la revendication 3, dans lequel le formeur est moulé par insertion avec l'enceinte externe.

5. Dispositif électronique (600), comprenant :
un corps (605) à l'intérieur duquel une circuiterie électronique est montée, et
un couvercle transparent ou translucide (100) selon l'une quelconque des revendications 1 à 4 monté de façon mobile sur le corps.

6. Dispositif électronique selon la revendication 5, dans lequel le couvercle est monté de façon mobile sur le corps par un ensemble de charnière (610), l'ensemble de charnière permettant un mouvement de pivotement relatif du couvercle par rapport au corps.

7. Dispositif électronique selon la revendication 5, dans lequel deux desdits fils sont supportés symétriquement sur le formeur.

8. Dispositif électronique selon la revendication 7, dans lequel les fils s'étendent le long de bords opposés du formeur.

9. Dispositif électronique selon la revendication 8, dans lequel une première longueur (250) de chacun des fils adjacents à l'ensemble de transducteur s'étend en éloignement de l'ensemble de charnière vers une extrémité libre du couvercle.

10. Dispositif électronique selon la revendication 9, dans lequel les fils ont des deuxièmes longueurs s'étendant à l'opposé (255) qui s'étendent dans des directions opposées le long d'un bord latéral du formeur interne, le bord latéral étant latéral par rapport aux bords longitudinaux.

11. Dispositif électronique selon la revendication 10, dans lequel les fils ont également des troisièmes longueurs (260) sensiblement parallèles s'étendant le long de bords opposés du formeur depuis l'extrémité libre vers l'ensemble de charnière.

12. Dispositif électronique selon la revendication 5, dans lequel le bord latéral et les bords longitudinaux du formeur interne ont une forme complémentaire aux bords adjacents correspondants du couvercle.
